# EUROPEAN PATENT SPECIFICATION

(11) **EP 4 198 329 B1**
(45) Date of publication and mention of the grant of the patent: **22.07.2026**
(21) Application number: 20949296.6
(22) Date of filing: 17.09.2020
(51) Int. Cl.: F16C 32/06

(54) **GAS COMPRESSOR, MOTOR, AND FOIL RADIAL AERODYNAMIC BEARING**
GASVERDICHTER, MOTOR UND RADIAL AERODYNAMISCHES FOLIENLAGER
COMPRESSEUR DE GAZ, MOTEUR, ET PALIER AÉRODYNAMIQUE RADIAL À FEUILLES

(30) Priority: 14.08.2020 CN 202010818101
(43) Date of publication of application: 21.06.2023
(73) Proprietor: Beijing Wenli Technology Co., Ltd., Beijing 100176 (CN)
(72) Inventor: HUA, Qingsong, Beijing 100176 (CN); XIAN, Cunni, Beijing 100176 (CN); QIU, Ruilin, Beijing 100176 (CN); LIU, Yabo, Beijing 100176 (CN); WEI, Jianxin, Beijing 100176 (CN)
(74) Representative: Lorenz Seidler Gossel Part. mbB
(86) International application number: PCT/CN2020/115731
(87) International publication number: WO 2022/032799

(56) References cited:
- EP-A1- 2 733 371
- CN-A- 105 041 870
- CN-A- 107 061 495
- CN-A- 108 368 874
- CN-A- 110 735 853
- US-A- 5 911 510
- US-A1- 2006 018 574
- US-A1- 2007 047 858
- US-A1- 2007 047 858
- US-A1- 2008 310 779
- US-A1- 2015 337 894
- US-B2- 7 553 086

## Description

The present application claims the priority to Chinese Patent Application No. 202010818101.5, titled "GAS COMPRESSOR, MOTOR AND FOIL RADIAL AERODYNAMIC BEARING", filed with the China National Intellectual Property Administration on August 14, 2020.

### FIELD

The present application relates to the technical field of high-speed rotating machinery, in particular to a gas compressor, a motor and a foil radial aerodynamic bearing. A foil radial aerodynamic bearing according to the preamble of claim 1 is known from CN 110735853 A.

### BACKGROUND

A foil radial aerodynamic bearing is a self-acting aerodynamic bearing supported by a flexible surface, which generally uses the surrounding gas as a lubricant, and belongs to a branch of aerodynamic lubrication technology. In the foil radial aerodynamic bearing, an inner surface of the bearing is supported by using an elastic foil, which greatly enhances the adaptability of the bearing. A solid self-lubricating coating is provided on the inner surface, supporting a rotor, of the bearing, which effectively reduces the friction and wear between the rotor and the surface of the bearing during start-stop contact.

One end of each of a top foil and a bump foil of the foil radial aerodynamic bearing in the conventional technology is fixed, and another end of each of the top foil and the bump foil can move freely along a circumferential direction and a radial direction of the bearing. After the foil radial aerodynamic bearing with this structure cooperates with the rotor, ends of the top foil and the bump foil which move freely are easily scratched by the rotor, resulting in the deformation of the top foil and the bump foil, and the rotor cannot rotate reversely in the bearing. Prior art patent document No. US5911510 disclosed a foil bearing which allows bi-directional rotation of a shaft. The foil bearing disclosed therein includes a plurality of thin compliant foils secured to a housing, and spring segments underlying the foils. Each spring segment has a first stiffness profile in a first zone and a second stiffness profile in a second zone. The first stiffness profile allows rotation in one direction, and the second stiffness profile allows rotation in an opposite direction. Prior art patent document No. US7553086 disclosed a journal foil bearing comprising a retaining member having an inner surface which defines a shaft opening within which a rotatable shaft is receivable for rotation; and a foil assembly affixed to and lining the inner surface and comprising a plurality of foil sub-assemblies each subtending a circumferential segment, of the inner surface. Each of the foil sub-assemblies may comprise an under foil sandwiched between a spring foil disposed radially outwardly of the under foil, and a top foil disposed radially inwardly of the under foil, the under foil, the top foil, and the spring foil each having a leading edge distal from a trailing edge in a direction of rotation of the rotatable shaft, and each of the under foil, the top foil, and the spring foil being affixed to the retaining member along their respective leading edge, their respective trailing edge, or both their respective leading edge and their respective trailing edge, wherein a radius of curvature of the top foil is less than a radius of curvature of the under foil. Prior art patent document No. US2007047858 disclosed a foil journal bearing with a dual stiffness spring. The foil journal bearing disclosed therein comprises a housing, a shaft arranged for relative coaxial rotation with respect to the housing, and a single spring layer surrounding the shaft. The single spring layer may have a first linear spring rate and a second linear spring rate wherein the first linear spring rate is formed by first pitch corrugations along a length of the single spring layer and the second linear spring rate is formed by second pitch corrugations along a length of the single spring layer. In an aspect of the invention, the foil journal bearing provides a top foil having first and second ends positioned in a notch in the housing. Prior art patent document No. US2015337894 disclosed a foil bearing including an outer member, and a plurality of foils that are mounted to an inner circumferential surface of the outer member and directly face the inner circumferential surface of the outer member in a radial direction without interposition of another member (such as back foils). The foils each include: holding portions that are formed at both circumferential ends and held while in contact with the outer member; and a body portion that is formed circumferentially between the holding portions and has a bearing surface. At least an end portion on one side in a circumferential direction of the body portion is raised radially inward with respect to the inner circumferential surface of the outer member.

Therefore, how to avoid the deformation of the top foil and the bump foil of the bearing along with the rotation of the rotor and at the same time realize the forward rotation and reverse rotation of the rotor in the bearing, has become a technical problem to be solved urgently by those skilled in the art.

### SUMMARY

The invention is set out in the appended set of claims. In view of the above, a foil radial aerodynamic bearing is provided according to the present application, so as to avoid the deformation of a top foil and a bump foil of the bearing along with the rotation of a rotor, and at the same time realize the forward rotation and reverse rotation of the rotor in the bearing. A gas compressor and a motor are further provided according to the present application.

To achieve the above objects, the following technical solutions are provided according to the present application.

A foil radial aerodynamic bearing includes multiple top foils, multiple bump foils and a bearing sleeve which are coaxially arranged in a listed sequence from inside to outside. The bearing sleeve is an annular bearing sleeve, and is provided with a pin hole configured for fitting with a positioning pin of a bearing seat on a motor housing.

The multiple top foils are uniformly arranged along a circumferential direction of the bearing sleeve. Each bump foil is located between the corresponding top foil and the bearing sleeve.

A first position-limiting plate is provided at a first end of each top foil along the circumferential direction of the bearing sleeve, and a second position-limiting plate is provided at a second end of each top foil along the circumferential direction of the bearing sleeve.

A third position-limiting plate is provided at a first end of each bump foil along the circumferential direction of the bearing sleeve, and the third position-limiting plate has a same shape as the first position-limiting plate.

Multiple position-limiting slot groups which are uniformly distributed along the circumferential direction of the bearing sleeve are defined on an inner surface of the bearing sleeve, and positions of the position-limiting slot groups are in one-to-one correspondence with positions of the top foils.

Each position-limiting slot group includes:
a first position-limiting slot, configured to be inserted by the first position-limiting plate and the third position-limiting plate and constrain the first position-limiting plate and the third position-limiting plate from moving in the first position-limiting slot along a radial direction of the bearing sleeve, where a slot width of the first position-limiting slot is larger than a sum of a thickness of the first position-limiting plate and a thickness of the third position-limiting plate; and
a second position-limiting slot, configured to be inserted by the second position-limiting plate and constrain the second position-limiting plate from moving in the second position-limiting slot along the radial direction of the bearing sleeve, where a slot width of the second position-limiting slot is larger than the thickness of the second position-limiting plate, and a distance between the first position-limiting slot and the second position-limiting slot along the circumferential direction of the bearing sleeve is larger than a length of each top foil,
wherein the thickness of a part of the bearing sleeve for cooperating with the bump foil is smaller than the thickness of a part of the bearing sleeve located between two adjacent position-limiting slot groups.

Preferably, in the above foil radial aerodynamic bearing, the first position-limiting plate is an L-shaped position-limiting plate; the second position-limiting plate is an L-shaped position-limiting plate; the first position-limiting plate is opposite to the second position-limiting plate; and the third position-limiting plate is an L-shaped position-limiting plate;
both the first position-limiting slot and the second position-limiting slot are L-shaped slots; the L-shaped slots have the same shape as the first position-limiting plate; a vertical portion of each L-shaped slot is defined along the radial direction of the bearing sleeve, and a horizontal portion of each L-shaped slot is defined along the circumferential direction of the bearing sleeve.

Preferably, in the above foil radial aerodynamic bearing, the first position-limiting plate is an L-shaped position-limiting plate; the second position-limiting plate is a straight position-limiting plate; and the third position-limiting plate is an L-shaped position-limiting plate;
the first position-limiting slot is an L-shaped slot and has the same shape as the first position-limiting plate; a vertical portion of the L-shaped slot is defined along the radial direction of the bearing sleeve, and a horizontal portion of the L-shaped slot is defined along the circumferential direction of the bearing sleeve;
the second position-limiting slot is a straight position-limiting slot; the second position-limiting slot is defined along the circumferential direction of the bearing sleeve; and an opening direction of the second position-limiting slot faces the L-shaped slot.

Preferably, in the above foil radial aerodynamic bearing, the first position-limiting plate is a straight position-limiting plate; the second position-limiting plate is a straight position-limiting plate; and the third position-limiting plate is a straight position-limiting plate;
the first position-limiting slot is a straight position-limiting slot; the second position-limiting slot is a straight position-limiting slot; an opening direction of the first position-limiting slot and an opening direction of the second position-limiting slot are opposite; and both the first position-limiting slot and the second position-limiting slot are defined along the circumferential direction of the bearing sleeve.

Preferably, in the above foil radial aerodynamic bearing, the first position-limiting plate is fixedly connected with a slot wall of the first position-limiting slot; or,
the second position-limiting plate is fixedly connected with a slot wall of the second position-limiting slot.

Preferably, in the above foil radial aerodynamic bearing, a fourth position-limiting plate is provided at a second end, along the circumferential direction of the bearing sleeve, of each bump foil; the fourth position-limiting plate has a same shape as the second position-limiting plate; the fourth position-limiting plate is configured to be inserted into the second position-limiting slot; and the slot width of the second position-limiting slot is larger than a sum of the thickness of the second position-limiting plate and the thickness of the fourth position-limiting plate.

Preferably, in the above foil radial aerodynamic bearing, the slot groups and the bearing sleeve are integrally formed.

Preferably, in the above foil radial aerodynamic bearing, a solid self-lubricating coating is provided on the inner surface of the bearing sleeve located between two adjacent position-limiting slot groups, and
a polymer wear-resistant coating is provided on an inner surface of each top foil.

A motor includes a foil radial aerodynamic bearing, where the foil radial aerodynamic bearing is the foil radial aerodynamic bearing according to any one of the above solutions.

A gas compressor includes a motor, where the motor is the motor according to the above solution.

It can be seen from the above technical solutions that the foil radial aerodynamic bearing according to the present application includes the top foils, the bump foils and the bearing sleeve which are coaxially arranged in a listed sequence from inside to outside. According to the present application, the first position-limiting plate and the second position-limiting plate are respectively provided at the first end and the second end, along the circumferential direction of the bearing sleeve, of each top foil, and the first end of each bump foil along the circumferential direction of the bearing sleeve is provided with the third position-limiting plate. The third position-limiting plate has the same shape as the first position-limiting plate. The multiple position-limiting slot groups which are uniformly distributed along the circumferential direction of the bearing sleeve are defined on the inner surface of the bearing sleeve, and each position-limiting slot group includes the first position-limiting slot and the second position-limiting slot. The first position-limiting slot and the second position-limiting slot of one position-limiting slot group are respectively engaged with the first position-limiting plate and the second position-limiting plate of the corresponding top foil. That is, two ends of the corresponding top foil are respectively located in the first position-limiting slot and the second position-limiting slot and cannot contact with a rotor. Therefore, the ends of the top foil do not rub against the rotor, thereby effectively avoiding the deformation of the top foil of the bearing along with the rotation of the rotor. The distance between the first position-limiting slot and the second position-limiting slot along the circumferential direction of the bearing sleeve is larger than the length of the top foil. The two ends of the top foil can respectively move in the first position-limiting slot and the second position-limiting slot, and the two ends of the top foil are free ends, so that the rotor can rotate forward and reversely in the bearing.

The motor disclosed in the present application includes the foil radial aerodynamic bearing according to any one of the above solutions. Since the foil radial aerodynamic bearing has the above technical effects, the motor with the foil radial aerodynamic bearing also has the same technical effects, which are not repeated herein.

The gas compressor disclosed in the present application includes the motor according to the above solution. Since the motor has the above technical effects, the gas compressor with the motor also has the same technical effects, which are not repeated herein.

### BRIEF DESCRIPTION OF THE DRAWINGS

For more clearly illustrating the technical solutions in embodiments of the present application or in the conventional technology, drawings referred to for describing the embodiments or the conventional technology will be briefly described hereinafter. Apparently, the drawings in the following description are only some embodiments of the present application, and for the person of ordinary skill in the art, other drawings can be obtained based on these provided drawings without creative efforts.
FIG. 1 is a schematic structural view of a foil radial aerodynamic bearing according to a first embodiment of the present application;
FIG. 2 is a schematic structural view of a bearing sleeve according to the first embodiment of the present application;
FIG. 3 is a schematic structural view of a top foil according to the first embodiment of the present application;
FIG. 4 is a schematic structural view of a bump foil according to the first embodiment of the present application;
FIG. 5 is a schematic structural view of the foil radial aerodynamic bearing according to a second embodiment of the present application;
FIG. 6 is a schematic structural view of the bearing sleeve according to the second embodiment of the present application;
FIG. 7 is a schematic structural view of the top foil according to the second embodiment of the present application;
FIG. 8 is a schematic structural view of the bump foil according to the second embodiment of the present application;
FIG. 9 is a schematic structural view of the foil radial aerodynamic bearing according to a third embodiment of the present application;
FIG. 10 is a schematic structural view of the bearing sleeve according to the third embodiment of the present application;
FIG. 11 is a schematic structural view of the top foil according to the third embodiment of the present application;
FIG. 12 is schematic structural view of the bump foil according to the third embodiment of the present application; and
FIG. 13 is a schematic view showing a movement of air from a large space between the bearing and a rotor to a small space between the bearing and the rotor according to an embodiment of the present application.

Reference numerals in the drawings are listed as follows:

| | | | |
|---|---|---|---|
| 1 | top foil, | 11 | first position-limiting plate, |
| 12 | second position-limiting plate, | 2 | bump foil, |
| 21 | third position-limiting plate, | 22 | fourth position-limiting plate, |
| 3 | bearing sleeve, | 31 | pin hole, |
| 32 | position-limiting slot group, | 321 | first position-limiting slot, |
| 322 | second position-limiting slot. | | |

### DETAILED DESCRIPTION OF THE EMBODIMENTS

A foil radial aerodynamic bearing is provided according to the present application, so as to avoid the deformation of a top foil and a bump foil of the bearing along with the rotation of a rotor, and at the same time realize the forward rotation and reverse rotation of the rotor in the bearing. A gas compressor and a motor are further provided according to the present application.

Technical solutions in the embodiments of the present application will be described clearly and completely as follows in conjunction with the drawings in the embodiments of the present application. It is apparent that the described embodiments are only a part of the embodiments according to the present application, rather than all of the embodiments. Based on the embodiments in the present application, all other embodiments obtained by those skilled in the art without creative efforts fall within the scope of protection of the present application.

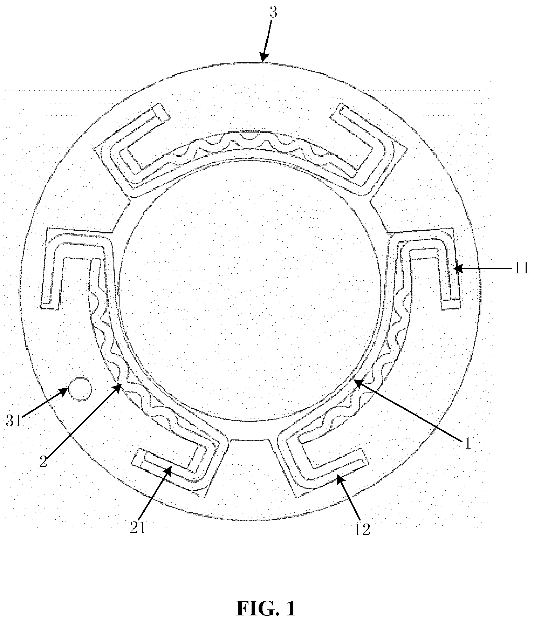

Reference is made to FIG. 1 to FIG. 13. a foil radial aerodynamic bearing is provided according to the present application, which includes multiple top foils 1, multiple bump foils 2 and a bearing sleeve 3 which are coaxially arranged in a listed sequence from inside to outside.

The bearing sleeve 3 is an annular bearing sleeve, and is provided with a pin hole 31 fitting with a positioning pin of a bearing seat on a motor housing. The bearing sleeve 3 is connected with the bearing seat through the cooperation of the pin hole 31 and the positioning pin, so as to circumferentially position a bearing ring.

Both the top foils 1 and the bump foils 2 are arc foils, and projections of the top foils 1 and the bump foils 2 on the bearing sleeve 3 along a radial direction of the bearing sleeve 3 are rectangular. As shown in FIG. 1, FIG. 5 and FIG. 9, the multiple top foils 1 are uniformly arranged along a circumferential direction of the bearing sleeve 3, and the bump foils 2 are located between the top foils 1 and the bearing sleeve 3. It should be noted that, the number of the bump foil 2 located between each top foil 1 and the bearing sleeve 3 can be one or at least two. The number of the bump foil 2 located between each top foil 1 and the bearing sleeve 3 is determined according to the bearing capacity of the foil radial aerodynamic bearing.

In this solution, a first position-limiting plate 11 is provided at a first end, along the circumferential direction of the bearing sleeve 3, of each top foil 1, and a second position-limiting plate 12 is provided at a second end, along the circumferential direction of the bearing sleeve 3, of each top foil 1. A third position-limiting plate 21 is provided at a first end, along the circumferential direction of the bearing sleeve 3, of each bump foil 2. The third position-limiting plate 21 has a same shape as the first position-limiting plate 11.

Multiple position-limiting slot groups 32 which are uniformly distributed along the circumferential direction of the bearing sleeve 3 are defined on an inner surface of the bearing sleeve 3. Positions of the position-limiting slot groups 32 are in one-to-one correspondence with positions of the top foils 1.

As shown in FIG. 1, FIG. 2, FIG. 5, FIG. 6, FIG. 9 and FIG. 10, each position-limiting slot group 32 includes a first position-limiting slot 321 and a second position-limiting slot 322. The first position-limiting slot 321 and the second position-limiting slot 322 are defined along an axial direction of the bearing sleeve 3 and extend through the bearing sleeve 3. The first position-limiting slot 321 and the second position-limiting slot 322 are distributed along the circumferential direction of the bearing sleeve 3.

The first position-limiting slot 321 is configured to be inserted by the first position-limiting plate 11 and the third position-limiting plate 21 and constrain the first position-limiting plate 11 and the third position-limiting plate 21 from moving in the first position-limiting slot 321 along the radial direction of the bearing sleeve 3. The second position-limiting slot 322 is configured to be inserted by the second position-limiting plate 12 and constrain the second position-limiting plate 12 from moving in the second position-limiting slot 322 along the radial direction of the bearing sleeve 3, so as to ensure that the corresponding top foil 1 does not disengage from the first position-limiting slot 321 and the second position-limiting slot 322 during operation of the bearing.

Further, during the operation of the bearing, the first position-limiting plate 11 and the second position-limiting plate 12 do not disengage from the first position-limiting slot 321 and the second position-limiting slot 322, and the third position-limiting plate 21 does not disengage from the first position-limiting slot 321.

A slot width of the first position-limiting slot 321 is larger than a sum of the thickness of the first position-limiting plate 11 and the thickness of the third position-limiting plate 21, which provides a movement space for the first end of the top foil 1 and the first end of the bump foil 2 to move in the first position-limiting slot 321 along the circumferential direction of the bearing sleeve 3, and absorbs the deformation of the top foil 1 and the bump foil 2 caused by aerodynamic force. A slot width of the second position-limiting slot 322 is larger than the thickness of the second position-limiting plate 12, which provides a movement space for the second end of the top foil 1 to move in the second position-limiting slot 322 along the circumferential direction of the bearing sleeve 3, and absorbs the deformation of the top foil 1 caused by aerodynamic force.

As shown in FIG. 1, FIG. 5 and FIG. 9, the first position-limiting slot 321 and the second position-limiting slot 322 of one position-limiting slot group 32 are respectively engaged with the first position-limiting plate 11 and the second position-limiting plate 12 of the corresponding top foil 1. A distance between the first position-limiting slot 321 and the second position-limiting slot 322 along the circumferential direction of the bearing sleeve 3 is larger than a length of the corresponding top foil 1. That is, two ends of the top foil 1 are respectively located in the first position-limiting slot 321 and the second position-limiting slot 322. When the top foil 1 is subjected to the force from the rotor, the two ends of the top foil 1 can respectively move in the first position-limiting slot 321 and the second position-limiting slot 322. The two ends of the top foil 1 of the foil radial aerodynamic bearing according to the present application are free ends, and the two ends of the top foil 1 are respectively located in the first position-limiting slot and the second position-limiting slot and cannot contact with the rotor, so that the rotor does not rub against the ends of the top foil 1 when the rotor rotates in the bearing, thereby effectively avoiding the deformation of the top foil 1 of the bearing along with the rotation of the rotor. Moreover, since the two ends of the top foil 1 can respectively move in the first position-limiting slot and the second position-limiting slot and the two ends of the top foil 1 are free ends, the rotor can rotate forward and reversely in the bearing.

The bump foils 2 are located between the top foils 1 and the bearing sleeve 3. The third position-limiting plate 21 is provided at a first end, along the circumferential direction of the bearing sleeve 3, of each bump foil 2. The third position-limiting plate 21 has the same shape as the first position-limiting plate 11. A second end of each bump foil 2 along the circumferential direction of the bearing sleeve 3 may be a free end, that is, may be not inserted into the second position-limiting slot 322, or may be inserted into the second position-limiting slot 322. The distance between the first position-limiting slot 321 and the second position-limiting slot 322 along the circumferential direction of the bearing sleeve 3 is larger than the length of the corresponding top foil 1, and is also larger than a length of the bump foil 2 located between the bearing sleeve 3 and the top foil 1. When the bump foil 2 is deformed, the first end of the bump foil 2 can move in the first position-limiting slot 321, and the second end of the bump foil 2 can move along the inner surface of the bearing sleeve 3 or in the second position-limiting slot 322, so that the bump foil 2 can absorb the deformation of the top foil 1 caused by aerodynamic force. Since the bump foil 2 is completely shielded by the top foil 1, the second end of the bump foil 2 does not contact with the rotor, and therefore does not rub against the rotor either, and does not hinder the forward or reverse rotation of the rotor either.

The distance between the first position-limiting slot 321 and the second position-limiting slot 322 along the circumferential direction of the bearing sleeve 3 is larger than the length of the corresponding top foil 1, which ensures that the deformation of the bump foil 2 and the top foil 1 along the circumferential direction of the bearing sleeve 3 caused by the aerodynamic force is not hindered by the first position-limiting slot 321 and the second position-limiting slot 322.

Preferably, the number of position-limiting slot groups 32 ranges from 3 to 12. Correspondingly, the number of the top foils 1 ranges from 3 to 12, and the number of the bump foils 2 ranges from 3n to 12n, where n is the number of layers of bump foils 2 located between each top foil 1 and the bearing sleeve 3, and n≥1.

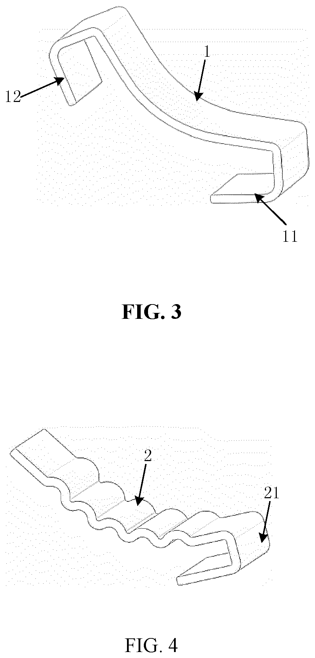

As shown in FIG. 3, FIG. 7 and FIG. 11, the structure of the top foil 1, except for the first position-limiting plate 11 and the second position-limiting plate 12, is an arc flat-plate structure, and a cavity is defined between an inner surface of the top foil 1 and the rotor.

As shown in FIG. 4, FIG. 8 and FIG. 12, the structure of the bump foil 2, except for the third position-limiting plate 21, is a corrugated BUMP elastic structure, which receives the aerodynamic force transmitted to the bump foil 2 through the top foil 1, and causes the bump foil 2 to deform along the circumferential direction of the bearing sleeve 3.

Since the bump foil 2 has certain elasticity, the top foil 1 and the bump foil 2 may move relative to the bearing ring when the top foil 1 is compressed. At this time, friction may occur between the top foil 1 and the bump foil 2, which balances the force generated by the deformation of the top foil 1 and the bump foil 2, damps the runout of the rotor in the bearing, and keeps the rotor operating stably.

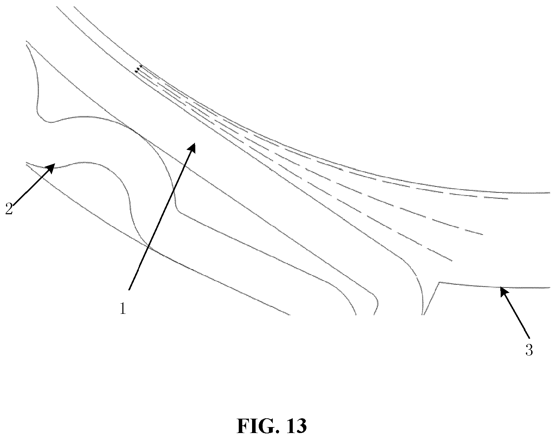

During the rotation of the rotor, a space between the bearing sleeve 3, located between adjacent position-limiting slot groups 32, of the bearing and the rotor is large, and a space between the top foil 1 of the bearing and the rotor is small. As shown in FIG. 13, the movement of air from the large space between the bearing and the rotor to the small space between the bearing and the rotor generates aerodynamic pressure, so that the bearing generates aerodynamic bearing capacity and supports the rotor to suspend in the bearing.

The shapes of the first position-limiting slot 321 and the second position-limiting slot 322 can be determined according to the actual needs. The shapes of the first position-limiting plate 11 and the third position-limiting plate 21 may be the same as the shape of the first position-limiting slot 321, or may be different from the shape of the first position-limiting slot 321. The shape of the second position-limiting plate may be the same as the shape of the second position-limiting slot 322, or may be different from the shape of the second position-limiting slot 322.

Preferably, the first position-limiting slot 321 has the same shape as the first position-limiting plate 11 and the third position-limiting plate 21, and the second position-limiting slot 322 has the same shape as the third position-limiting plate 21. Such design can reduce the design difficulty of the bearing sleeve 3, the top foils 1 and the bump foils 2.

In a first embodiment of the present application, as shown in FIG. 1 and FIG. 3, the first position-limiting plate 11 is an L-shaped position-limiting plate, the second position-limiting plate 12 is an L-shaped position-limiting plate, and the first position-limiting plate 11 is opposite to the second position-limiting plate 12. As shown in FIG. 4, the third position-limiting plate 21 is an L-shaped position-limiting plate. After the top foil 1 cooperates with the bump foil 2, the third position-limiting plate 21 is parallel to the first position-limiting plate 11, the third position-limiting plate 21 is wrapped by the first position-limiting plate 11, and an outer surface of the first position-limiting plate 11 abuts against an inner surface of the third position-limiting plate 21.

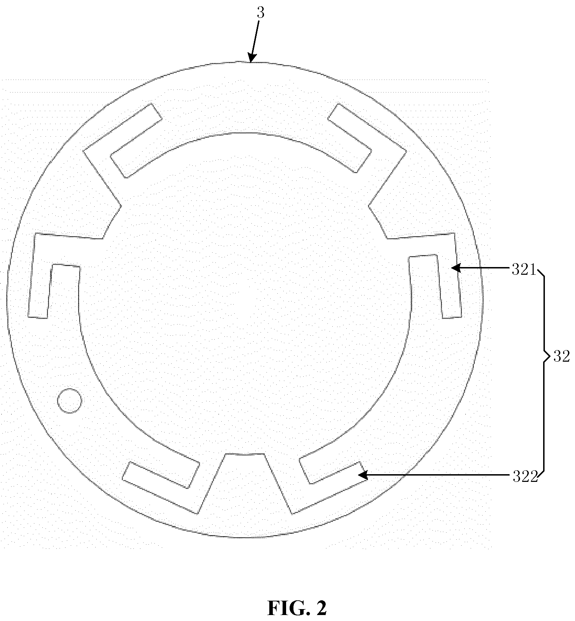

As shown in FIG. 2, both the first position-limiting slot 321 and the second position-limiting slot 322 are L-shaped slots. The L-shaped slots have the same shape as the first position-limiting plate 11. That is, the first position-limiting slot 321 and the second position-limiting slot 322 both have the same shape as the first position-limiting plate 11. The first position-limiting plate 11 and the second position-limiting plate 12 have the same shape as the third position-limiting plate 21.

As shown in FIG. 1 and FIG. 2, a vertical portion of each L-shaped slot is defined along the radial direction of the bearing sleeve 3, and a horizontal portion of each L-shaped slot is defined along the circumferential direction of the bearing sleeve 3. The first position-limiting slot 321 is opposite to the second position-limiting slot 322.

In this embodiment, the first position-limiting plate 11 and the third position-limiting plate 21 are inserted into the first position-limiting slot 321. The slot width of the first position-limiting slot 321 is larger than a sum of the thickness of the first position-limiting plate 11 and the thickness of the third position-limiting plate 21. The second position-limiting plate 12 is inserted into the second position-limiting slot 322. The slot width of the second position-limiting slot 322 is larger than the thickness of the second position-limiting plate 12. In this embodiment, the slot width of the second position-limiting slot 322 may be smaller than the slot width of the first position-limiting slot 321, or the slot width of the second position-limiting slot 322 may be equal to the slot width of the first position-limiting slot 321.

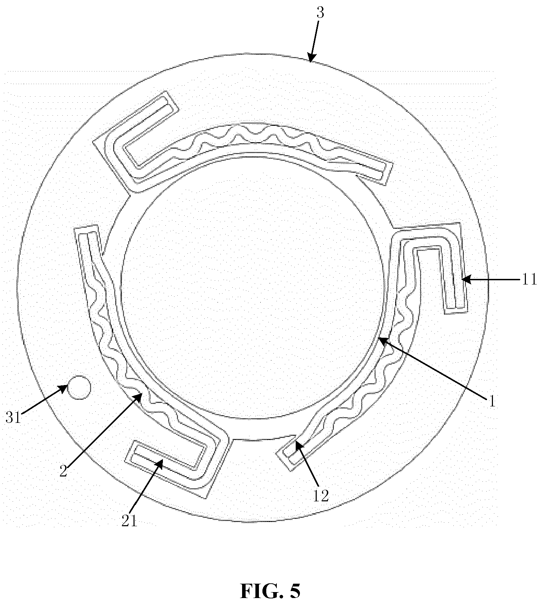

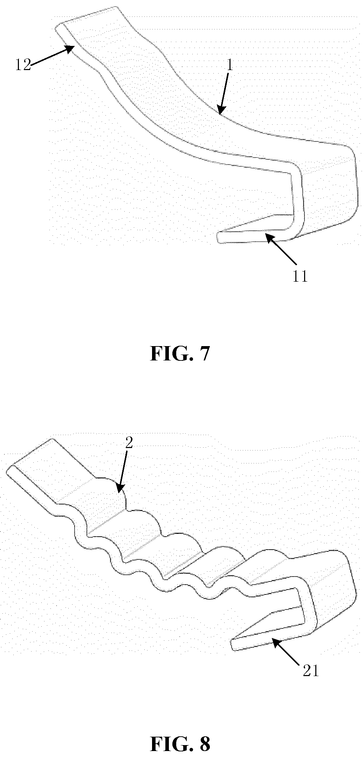

In a second specific embodiment of the present application, as shown in FIG. 5 and FIG. 7, the first position-limiting plate 11 is an L-shaped position-limiting plate, and the second position-limiting plate 12 is a straight position-limiting plate. As shown in FIG. 8, the third position-limiting plate 21 is an L-shaped position-limiting plate. The first position-limiting plate 11 has the same shape as the third position-limiting plate 21. After the top foil 1 cooperates with the bump foil 2, the first position-limiting plate 11 is parallel to the third position-limiting plate 21, the third position-limiting plate 21 is wrapped by the first position-limiting plate 11, and an outer surface of the first position-limiting plate 11 abuts against an inner surface of the third position-limiting plate 21.

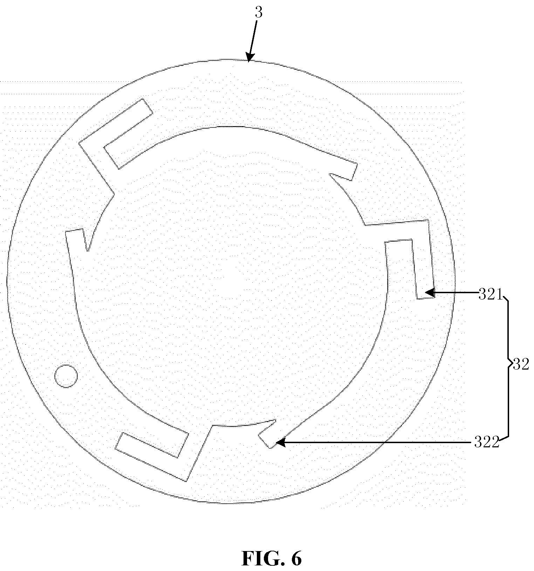

As shown in FIG. 5 and FIG. 6, the first position-limiting slot 321 is an L-shaped slot and has the same shape as the first position-limiting plate 11. A vertical portion of the L-shaped slot is defined along the radial direction of the bearing sleeve 3, and a horizontal portion of the L-shaped slot is defined along the circumferential direction of the bearing sleeve 3. The second position-limiting slot 322 is a straight slot. The second position-limiting slot 322 is defined along the circumferential direction of the bearing sleeve 3. An opening direction of the second position-limiting slot 322 faces the L-shaped slot.

In this embodiment, the first position-limiting plate 11 and the third position-limiting plate 21 are inserted into the first position-limiting slot 321. The slot width of the first position-limiting slot 321 is larger than a sum of the thickness of the first position-limiting plate 11 and the thickness of the third position-limiting plate 21. The second position-limiting plate 12 is inserted into the second position-limiting slot 322. The slot width of the second position-limiting slot 322 is larger than the thickness of the second position-limiting plate 12. In this embodiment, the slot width of the second position-limiting slot 322 may be smaller than the slot width of the first position-limiting slot 321, or the slot width of the second position-limiting slot 322 may be equal to the slot width of the first position-limiting slot 321.

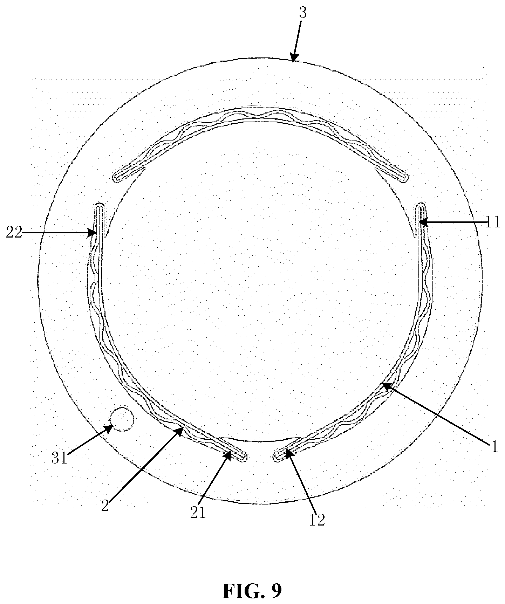

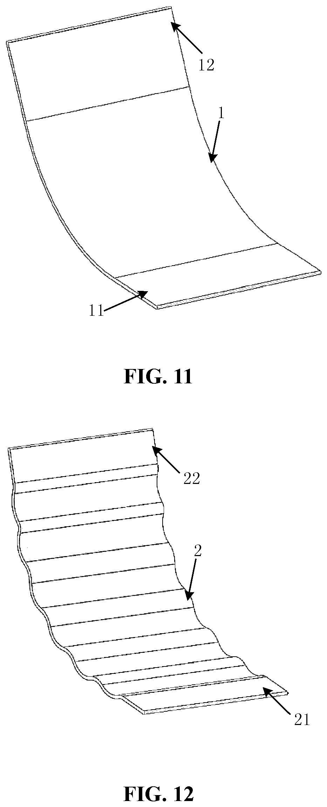

In a third embodiment of the present application, not part of the invention, as shown in FIG. 9 and FIG. 11, the first position-limiting plate 11 is a straight position-limiting plate, and the second position-limiting plate 12 is a straight position-limiting plate. As shown in FIG. 12, the third position-limiting plate 21 is a straight position-limiting plate.

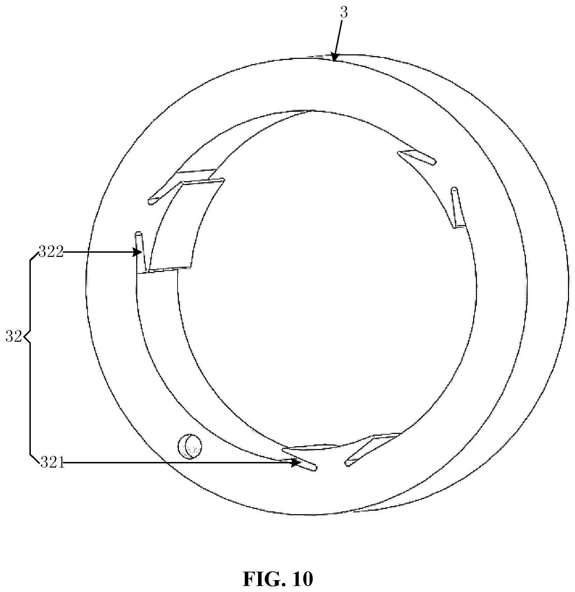

As shown in FIG. 9 and FIG. 10, the first position-limiting slot 321 is a straight position-limiting slot, and the second position-limiting slot 322 is a straight position-limiting slot. An opening direction of the first position-limiting slot 321 and an opening direction of the second position-limiting slot 322 are opposite, and both the first position-limiting slot 321 and the second position-limiting slot 322 are defined along the circumferential direction of the bearing sleeve 3.

In this embodiment, the first position-limiting slot 321 and the second position-limiting slot 322 are required to have sufficient depth, so as to prevent the first position-limiting plate 11 and the second position-limiting plate 12 from disengaging from the first position-limiting slot 321 and the second position-limiting slot 322.

In this embodiment, in order to improve the stability of the cooperation between the top foil 1 and the bearing sleeve 3, according to the present application, the first position-limiting plate 11 is fixedly connected with a slot wall of the first position-limiting slot 321, while the second position-limiting plate 12 is directly inserted into the second position-limiting slot 322 and is not fixedly connected with a slot wall of the second position-limiting slot 322. Alternatively, the second position-limiting plate 12 is fixedly connected with a slot wall of the second position-limiting slot 322, while the first position-limiting plate 11 is directly inserted into the first position-limiting slot 321 and is not fixedly connected with a slot wall of the first position-limiting slot 321. In these cases, one end of the top foil 1 is fixed, and another end of the top foil 1 is free. Such arrangement can achieve the circumferential position-limiting of the top foil 1 on the bearing sleeve 3, preventing the first position-limiting plate 11 from disengaging from the first position-limiting slot 321 during operation, and also achieve the axial position-limiting of the top foil 1 on the bearing sleeve 3, preventing the top foil 1 from sliding in the first position-limiting slot 321 along the axial direction of the bearing sleeve 3.

In this embodiment, the first position-limiting plate 11 and the third position-limiting plate 21 are inserted into the first position-limiting slot 321. The slot width of the first position-limiting slot 321 is larger than a sum of the thickness of the first position-limiting plate 11 and the thickness of the third position-limiting plate 21. The second position-limiting plate 12 is inserted into the second position-limiting slot 322. The slot width of the second position-limiting slot 322 is larger than the thickness of the second position-limiting plate 12. In this embodiment, the slot width of the second position-limiting slot 322 may be smaller than the slot width of the first position-limiting slot 321, or the slot width of the second position-limiting slot 322 may be equal to the slot width of the first position-limiting slot 321.

In a fourth embodiment of the present application, a fourth position-limiting plate 22 is provided at a second end, along the circumferential direction of the bearing sleeve 3, of each bump foil 2. The fourth position-limiting plate 22 has a same shape as the second position-limiting plate 12. The fourth position-limiting plate 22 is configured to be inserted into the second position-limiting slot 322. The slot width of the second position-limiting slot 322 is larger than a sum of the thickness of the second position-limiting plate 12 and the thickness of the fourth position-limiting plate 22.

In this embodiment, the first position-limiting plate 11 and the third position-limiting plate 21 are inserted into the first position-limiting slot 321, and the second position-limiting plate 12 and the fourth position-limiting plate 22 are inserted into the second position-limiting slot 322. Preferably, the slot width of the first position-limiting slot 321 is the same as the slot width of the second position-limiting slot 322.

In this embodiment, the fourth position-limiting plate 22 may be an L-shaped position-limiting plate, or a straight position-limiting plate.

In the embodiment where the fourth position-limiting plate 22 is an L-shaped position-limiting plate, after the top foil 1 cooperates with the bump foil 2, the fourth position-limiting plate 22 is parallel to the second position-limiting plate 12, the fourth position-limiting plate 22 is wrapped by the second position-limiting plate 12, and an outer surface of the fourth position-limiting plate 22 abuts against an inner surface of the second position-limiting plate 12.

In the embodiment where the fourth position-limiting plate 22 is a straight position-limiting plate, as shown in FIG. 9, after the top foil 1 cooperates with the bump foil 2, the fourth position-limiting plate 22 is parallel to the second position-limiting plate 12, and an outer surface of the fourth position-limiting plate 22 abuts against an inner surface of the second position-limiting plate 12.

In the embodiment where the fourth position-limiting plate 22 is not provided, the slot width of the second position-limiting slot may be designed to be smaller than the slot width of the first position-limiting slot.

In order to reduce the machining difficulty of the bearing sleeve 3, the slot groups and the bearing sleeve 3 are integrally formed.

In the embodiment, not part of the invention, where the first position-limiting plate 11, the second position-limiting plate 12, the third position-limiting plate 21 and/or the fourth position-limiting plate 22 are straight position-limiting plates, the first position-limiting plate 11, the second position-limiting plate 12, the third position-limiting plate 21 and/or the fourth position-limiting plate 22 are inclined relative to tangents at ends of the top foil 1 and the bump foil 2, and are inclined away from inner arc surfaces of the top foil 1 and the bump foil 2.

According to an embodiment not part of the invention, the first position-limiting plate 11, the second position-limiting plate 12, the third position-limiting plate 21 and/or the fourth position-limiting plate 22 are not limited to L-shaped position-limiting plates or straight position-limiting plates, but can be other shapes that can realize the present application, which is not limited herein.

Preferably, the second position-limiting plate 12, and/or the fourth position-limiting plate 22 are L-shaped position-limiting plates. Compared with the straight position-limiting plates, the engagement between the L-shaped position-limiting plates and the position-limiting slot groups 32 on the bearing sleeve 3 is more stable, which can effectively prevent the top foils 1 from disengaging from the position-limiting slot groups 32, thus improving the reliability of the assembly of the foil radial aerodynamic bearing.

One end of each bump foil 2 according to the present invention is provided with the third position-limiting plate 21 and optionally with the fourth position-limiting plate 22, which ensures that one end of the bump foil 2 can be inserted into the first position-limiting slot 321 or the second position-limiting slot 322 to position the bump foil 2 along the circumferential direction of the bearing sleeve 3.

Preferably, the first position-limiting plate 11 and the second position-limiting plate 12 are integrally formed with the top foil 1, and the third position-limiting plate 21 and the fourth position-limiting plate 22 are integrally formed with the bump foil 2.

A cavity is formed between the bearing sleeve 3 located between two adjacent position-limiting slot groups 32 and the rotor, so as to improve the starting bearing capacity of the bearing.

A solid self-lubricating coating is provided on the inner surface of the bearing sleeve 3 located between two adjacent position-limiting slot groups 32, so as to reduce friction torque and improve the stability of operation of the bearing.

In the foil radial aerodynamic bearing according to the present application, an inner ring of the bearing sleeve 3 needs to be cut when the position-limiting slot groups 32 are machined. As shown in FIG. 2, FIG. 6 and FIG. 10, the thickness of the part of the bearing sleeve 3 for cooperating with the bump foil 2 is smaller than the thickness of the part of the bearing sleeve 3 located between two adjacent position-limiting slot groups 32. According to the present application, the part of the bearing sleeve 3 for cooperating with the bump foil 2 and the top foil 1 is cut, so that the bump foil 2 and the top foil 1 can cooperate with both the position-limiting slot group 32 and the rotor.

Since the part of the bearing sleeve 3 for cooperating with the bump foil 2 and the top foil 1 is cut, the gap between the bump foil 2, the top foil 1 and the bearing sleeve 3 is increased, forming a larger gas gap. More gas can enter the gas gap, thereby increasing the thickness of the gas film of the foil radial aerodynamic bearing and enhancing the bearing capacity of the bearing.

In order to further optimize the above technical solutions, a polymer wear-resistant coating is provided on the inner surface of each top foil 1, so as to prolong the service life of each top foil 1.

A motor is further disclosed in the present application, which includes the foil radial aerodynamic bearing according to any one of the above solutions.

Since the foil radial aerodynamic bearing has the above technical effects, the motor with the foil radial aerodynamic bearing also has the same technical effects, which are not repeated herein.

A gas compressor is further disclosed in the present application, which includes the motor according to the above solution.

Since the motor has the above technical effects, the gas compressor with the motor also has the same technical effects, which are not repeated herein.

According to the above description of the disclosed embodiments, those skilled in the art may implement or practice the present application. The invention is defined by the appended claims.

## Claims

1. A foil radial aerodynamic bearing, comprising a plurality of top foils (1), a plurality of bump foils (2) and a bearing sleeve (3) which are coaxially arranged in a listed sequence from inside to outside, wherein the bearing sleeve (3) is an annular bearing sleeve, and is provided with a pin hole (31) configured for fitting with a positioning pin of a bearing seat on a motor housing;
the plurality of top foils (1) are uniformly arranged along a circumferential direction of the bearing sleeve (3), and each bump foil (2) is located between the corresponding top foil (1) and the bearing sleeve (3);
a first position-limiting plate (11) is provided at a first end, along the circumferential direction of the bearing sleeve (3), of each top foil (1), and a second position-limiting plate (12) is provided at a second end, along the circumferential direction of the bearing sleeve (3), of each top foil (1);
a third position-limiting plate (21) is provided at a first end, along the circumferential direction of the bearing sleeve (3), of each bump foil (2), and the third position-limiting plate (21) has a same shape as the first position-limiting plate (11);
a plurality of position-limiting slot groups (32) which are uniformly distributed along the circumferential direction of the bearing sleeve (3) are defined on an inner surface of the bearing sleeve (3), and positions of the plurality of the position-limiting slot groups (32) are in one-to-one correspondence with positions of the plurality of top foils (1);
each position-limiting slot group (32) comprises:
a first position-limiting slot (321), configured to be inserted by the first position-limiting plate (11) and the third position-limiting plate (21) and constrain the first position-limiting plate (11) and the third position-limiting plate (21) from moving in the first position-limiting slot (321) along a radial direction of the bearing sleeve (3), wherein a slot width of the first position-limiting slot (321) is larger than a sum of a thickness of the first position-limiting plate (11) and a thickness of the third position-limiting plate (21); and
a second position-limiting slot (322), configured to be inserted by the second position-limiting plate (12) and constrain the second position-limiting plate (12) from moving in the second position-limiting slot (322) along the radial direction of the bearing sleeve (3), wherein a slot width of the second position-limiting slot (322) is larger than a thickness of the second position-limiting plate (12), and a distance between the first position-limiting slot (321) and the second position-limiting slot (322) along the circumferential direction of the bearing sleeve (3) is larger than a length of each top foil (1); wherein
the thickness of a part of the bearing sleeve (3) for cooperating with the bump foil (2) is smaller than the thickness of a part of the bearing sleeve (3) located between two adjacent position-limiting slot groups (32),
the foil radial aerodynamic bearing is **characterized in that**,
the first position-limiting plate (11) is an L-shaped position-limiting plate; the second positioning-limiting plate (12) is an L-shaped position limiting plate or a straight position-limiting plate; and the third position-limiting plate (21) is an L-shaped position-limiting plate; and
the first position-limiting slot (321) is an L-shaped slot and has the same shape as the first position-limiting plate (11); a vertical portion of the L-shaped slot is defined along the radial direction of the bearing sleeve (3), and a horizontal portion of the L-shaped slot is defined along the circumferential direction of the bearing sleeve (3).

2. The foil radial aerodynamic bearing according to claim 1, wherein the second position-limiting plate (12) is an L-shaped position-limiting plate; the first position-limiting plate (11) is opposite to the second position-limiting plate (12); and
the second position-limiting slot (322) is an L-shaped slot having the same shape as the first position-limiting plate (11), a vertical portion of the L-shaped slot is defined along the radial direction of the bearing sleeve (3), and a horizontal portion of the L-shaped slot is defined along the circumferential direction of the bearing sleeve (3).

3. The foil radial aerodynamic bearing according to claim 1, wherein the second position-limiting plate (12) is a straight position-limiting plate; and
the second position-limiting slot (322) is a straight position-limiting slot; the second position-limiting slot (322) is defined along the circumferential direction of the bearing sleeve (3); and an opening direction of the second position-limiting slot (322) faces the L-shaped slot.

4. The foil radial aerodynamic bearing according to any one of claims 1 to 3, wherein a fourth position-limiting plate (22) is provided at a second end, along the circumferential direction of the bearing sleeve (3), of each bump foil (2); the fourth position-limiting plate (22) has a same shape as the second position-limiting plate (12); the fourth position-limiting plate (22) is configured to be inserted into the second position-limiting slot (322); and the slot width of the second position-limiting slot (322) is larger than a sum of the thickness of the second position-limiting plate (12) and the thickness of the fourth position-limiting plate (22).

5. The foil radial aerodynamic bearing according to claim 1, wherein the slot groups and the bearing sleeve (3) are integrally formed.

6. The foil radial aerodynamic bearing according to claim 1, wherein a solid self-lubricating coating is provided on the inner surface of the bearing sleeve (3) located between two adjacent position-limiting slot groups (32), and
a polymer wear-resistant coating is provided on an inner surface of each top foil (1).

7. A motor, comprising the foil radial aerodynamic bearing according to any one of claims 1 to 6.

8. A gas compressor, comprising the motor according to claim 7.

## Patentansprüche

1. Folien-Radial-Aerodynamiklager, umfassend eine Mehrzahl von Deckfolien (1), eine Mehrzahl von Wellfolien (2) und eine Lagerhülse (3), die in einer aufgeführten Reihenfolge von innen nach außen koaxial angeordnet sind, wobei die Lagerhülse (3) eine ringförmige Lagerhülse ist und mit einem Stiftloch (31) versehen ist, das zum Zusammenpassen mit einem Positionierstift eines Lagersitzes an einem Motorgehäuse eingerichtet ist;
die Mehrzahl von Deckfolien (1) ist entlang einer Umfangsrichtung der Lagerhülse (3) gleichmäßig angeordnet, und jede Wellfolie (2) befindet sich zwischen der entsprechenden Deckfolie (1) und der Lagerhülse (3);
eine erste Positionsbegrenzungsplatte (11) ist an einem ersten Ende, entlang der Umfangsrichtung der Lagerhülse (3), jeder Deckfolie (1) vorgesehen, und eine zweite Positionsbegrenzungsplatte (12) ist an einem zweiten Ende, entlang der Umfangsrichtung der Lagerhülse (3), jeder Deckfolie (1) vorgesehen;
eine dritte Positionsbegrenzungsplatte (21) ist an einem ersten Ende, entlang der Umfangsrichtung der Lagerhülse (3), jeder Wellfolie (2) vorgesehen, und die dritte Positionsbegrenzungsplatte weist dieselbe Form wie die erste Positionsbegrenzungsplatte (11) auf;
eine Mehrzahl von Positionsbegrenzungsnutgruppen (32), die entlang der Umfangsrichtung der Lagerhülse (3) gleichmäßig verteilt sind, ist an einer Innenfläche der Lagerhülse (3) definiert, und Positionen der Mehrzahl der Positionsbegrenzungsnutgruppen (32) stehen in einer Eins-zu-eins-Entsprechung mit Positionen der Mehrzahl von Deckfolien (1);
jede Positionsbegrenzungsnutgruppe (32) umfasst:
eine erste Positionsbegrenzungsnut (321), die dazu eingerichtet ist, dass die erste Positionsbegrenzungsplatte (11) und die dritte Positionsbegrenzungsplatte (21) in sie eingeführt werden, und die erste Positionsbegrenzungsplatte (11) und die dritte Positionsbegrenzungsplatte (21) daran hindert, sich in der ersten Positionsbegrenzungsnut (321) entlang einer radialen Richtung der Lagerhülse (3) zu bewegen, wobei eine Nutbreite der ersten Positionsbegrenzungsnut (321) größer ist als eine Summe einer Dicke der ersten Positionsbegrenzungsplatte (11) und einer Dicke der dritten Positionsbegrenzungsplatte (21); und
eine zweite Positionsbegrenzungsnut (322), die dazu eingerichtet ist, dass die zweite Positionsbegrenzungsplatte (12) in sie eingeführt wird, und die zweite Positionsbegrenzungsplatte (12) daran hindert, sich in der zweiten Positionsbegrenzungsnut (322) entlang der radialen Richtung der Lagerhülse (3) zu bewegen, wobei eine Nutbreite der zweiten Positionsbegrenzungsnut (322) größer ist als eine Dicke der zweiten Positionsbegrenzungsplatte (12), und ein Abstand zwischen der ersten Positionsbegrenzungsnut (321) und der zweiten Positionsbegrenzungsnut (322) entlang der Umfangsrichtung der Lagerhülse (3) größer ist als eine Länge jeder Deckfolie (2); wobei
die Dicke eines Teils der Lagerhülse (3) zum Zusammenwirken mit der Wellfolie (2) kleiner ist als die Dicke eines Teils der Lagerhülse (3), der zwischen zwei benachbarten Positionsbegrenzungsnutgruppen (32) angeordnet ist, wobei das Folien-Radial-Aerodynamiklager **dadurch gekennzeichnet ist, dass**
die erste Positionsbegrenzungsplatte (11) eine L-förmige Positionsbegrenzungsplatte ist;
die zweite Positionsbegrenzungsplatte (12) eine L-förmige Positionsbegrenzungsplatte oder eine gerade Positionsbegrenzungsplatte ist; und
die dritte Positionsbegrenzungsplatte (21) eine L-förmige Positionsbegrenzungsplatte ist; und
die erste Positionsbegrenzungsnut (321) eine L-förmige Nut ist und dieselbe Form wie die erste Positionsbegrenzungsplatte (11) aufweist; ein vertikaler Abschnitt der L-förmigen Nut ist entlang der radialen Richtung der Lagerhülse (3) definiert, und ein horizontaler Abschnitt der L-förmigen Nut ist entlang der Umfangsrichtung der Lagerhülse (3) definiert.

2. Folien-Radial-Aerodynamiklager nach Anspruch 1, wobei die zweite Positionsbegrenzungsplatte (12) eine L-förmige Positionsbegrenzungsplatte ist; die erste Positionsbegrenzungsplatte (11) der zweiten Positionsbegrenzungsplatte (12) gegenüberliegt; und
die zweite Positionsbegrenzungsnut (322) eine L-förmige Nut ist, die dieselbe Form wie die erste Positionsbegrenzungsplatte (11) aufweist, wobei ein vertikaler Abschnitt der L-förmigen Nut entlang der radialen Richtung der Lagerhülse (3) definiert ist, und ein horizontaler Abschnitt der L-förmigen Nut entlang der Umfangsrichtung der Lagerhülse (3) definiert ist.

3. Folien-Radial-Aerodynamiklager nach Anspruch 1, wobei die zweite Positionsbegrenzungsplatte (12) eine gerade Positionsbegrenzungsplatte ist; und
die zweite Positionsbegrenzungsnut (322) eine gerade Positionsbegrenzungsnut ist; die zweite Positionsbegrenzungsnut (322) entlang der Umfangsrichtung der Lagerhülse (3) definiert ist; und eine Öffnungsrichtung der zweiten Positionsbegrenzungsnut (322) der L-förmigen Nut zugewandt ist.

4. Folien-Radial-Aerodynamiklager nach einem der Ansprüche 1 bis 3, wobei eine vierte Positionsbegrenzungsplatte (22) an einem zweiten Ende, entlang der Umfangsrichtung der Lagerhülse (3), jeder Wellfolie (2) vorgesehen ist; die vierte Positionsbegrenzungsplatte (22) dieselbe Form wie die zweite Positionsbegrenzungsplatte (12) aufweist; die vierte Positionsbegrenzungsplatte dazu eingerichtet ist, in die zweite Positionsbegrenzungsnut (322) eingeführt zu werden; und die Nutbreite der zweiten Positionsbegrenzungsnut (322) größer ist als eine Summe der Dicke der zweiten Positionsbegrenzungsplatte (12) und der Dicke der vierten Positionsbegrenzungsplatte (22).

5. Folien-Radial-Aerodynamiklager nach Anspruch 1, wobei die Nutgruppen und die Lagerhülse (3) einstückig ausgebildet sind.

6. Folien-Radial-Aerodynamiklager nach Anspruch 1, wobei eine feste selbstschmierende Beschichtung auf der Innenfläche der Lagerhülse (3) vorgesehen ist, die zwischen zwei benachbarten Positionsbegrenzungsnutgruppen (32) angeordnet ist, und
eine verschleißfeste Polymerbeschichtung auf einer Innenfläche jeder Deckfolie (1) vorgesehen ist.

7. Motor, umfassend das Folien-Radial-Aerodynamiklager nach einem der Ansprüche 1 bis 6.

8. Gasverdichter, umfassend den Motor nach Anspruch 7.

## Revendications

1. Palier aérodynamique radial à feuilles, comprenant une pluralité de feuilles supérieures (1), une pluralité de feuilles ondulées (2) et un manchon de palier (3), qui sont agencés coaxialement dans un ordre indiqué de l'intérieur vers l'extérieur, dans lequel le manchon de palier (3) est un manchon de palier annulaire, et est pourvu d'un trou de pion (31) configuré pour s'ajuster avec un pion de positionnement d'un siège de palier sur un carter de moteur ;
la pluralité de feuilles supérieures (1) est agencée uniformément selon une direction circonférentielle du manchon de palier (3), et chaque feuille ondulée (2) est située entre la feuille supérieure correspondante (1) et le manchon de palier (3) ;
une première plaque de limitation de position (11) est prévue à une première extrémité, selon la direction circonférentielle du manchon de palier (3), de chaque feuille supérieure (1), et une deuxième plaque de limitation de position (12) est prévue à une deuxième extrémité, selon la direction circonférentielle du manchon de palier (3), de chaque feuille supérieure (1) ;
une troisième plaque de limitation de position (21) est prévue à une première extrémité, selon la direction circonférentielle du manchon de palier (3), de chaque feuille ondulée (2), et la troisième plaque de limitation de position a une même forme que la première plaque de limitation de position (11) ;
une pluralité de groupes de rainures de limitation de position (32), qui sont répartis uniformément selon la direction circonférentielle du manchon de palier (3), sont définis sur une surface intérieure du manchon de palier (3), et des positions de la pluralité des groupes de rainures de limitation de position (32) sont en correspondance biunivoque avec des positions de la pluralité de feuilles supérieures (1) ;
chaque groupe de rainures de limitation de position (32) comprend :
une première rainure de limitation de position (321), configurée pour recevoir l'insertion de la première plaque de limitation de position (11) et de la troisième plaque de limitation de position (21) et pour empêcher la première plaque de limitation de position (11) et la troisième plaque de limitation de position (21) de se déplacer dans la première rainure de limitation de position (321) selon une direction radiale du manchon de palier (3), dans laquelle une largeur de rainure de la première rainure de limitation de position (321) est supérieure à une somme d'une épaisseur de la première plaque de limitation de position (11) et d'une épaisseur de la troisième plaque de limitation de position (21) ; et
une deuxième rainure de limitation de position (322), configurée pour recevoir l'insertion de la deuxième plaque de limitation de position (12) et pour empêcher la deuxième plaque de limitation de position (12) de se déplacer dans la deuxième rainure de limitation de position (322) selon la direction radiale du manchon de palier (3), dans laquelle une largeur de rainure de la deuxième rainure de limitation de position (322) est supérieure à une épaisseur de la deuxième plaque de limitation de position (12), et une distance entre la première rainure de limitation de position (321) et la deuxième rainure de limitation de position (322) selon la direction circonférentielle du manchon de palier (3) est supérieure à une longueur de chaque feuille supérieure (2) ; dans lequel
l'épaisseur d'une partie du manchon de palier (3) destinée à coopérer avec la feuille ondulée (2) est inférieure à l'épaisseur d'une partie du manchon de palier (3) située entre deux groupes de rainures de limitation de position (32) adjacents, le palier aérodynamique radial à feuilles étant **caractérisé en ce que**
la première plaque de limitation de position (11) est une plaque de limitation de position en forme de L ;
la deuxième plaque de limitation de position (12) est une plaque de limitation de position en forme de L ou une plaque de limitation de position droite ; et
la troisième plaque de limitation de position (21) est une plaque de limitation de position en forme de L ; et
la première rainure de limitation de position (321) est une rainure en forme de L et a la même forme que la première plaque de limitation de position (11) ; une portion verticale de la rainure en forme de L est définie selon la direction radiale du manchon de palier (3), et une portion horizontale de la rainure en forme de L est définie selon la direction circonférentielle du manchon de palier (3).

2. Palier aérodynamique radial à feuilles selon la revendication 1, dans lequel la deuxième plaque de limitation de position (12) est une plaque de limitation de position en forme de L ; la première plaque de limitation de position (11) est opposée à la deuxième plaque de limitation de position (12) ; et
la deuxième rainure de limitation de position (322) est une rainure en forme de L ayant la même forme que la première plaque de limitation de position (11), une portion verticale de la rainure en forme de L est définie selon la direction radiale du manchon de palier (3), et une portion horizontale de la rainure en forme de L est définie selon la direction circonférentielle du manchon de palier (3).

3. Palier aérodynamique radial à feuilles selon la revendication 1, dans lequel la deuxième plaque de limitation de position (12) est une plaque de limitation de position droite ; et
la deuxième rainure de limitation de position (322) est une rainure de limitation de position droite ; la deuxième rainure de limitation de position (322) est définie selon la direction circonférentielle du manchon de palier (3) ; et une direction d'ouverture de la deuxième rainure de limitation de position (322) fait face à la rainure en forme de L.

4. Palier aérodynamique radial à feuilles selon l'une quelconque des revendications 1 à 3, dans lequel une quatrième plaque de limitation de position (22) est prévue à une deuxième extrémité, selon la direction circonférentielle du manchon de palier (3), de chaque feuille ondulée (2) ; la quatrième plaque de limitation de position (22) a une même forme que la deuxième plaque de limitation de position (12) ; la quatrième plaque de limitation de position est configurée pour être insérée dans la deuxième rainure de limitation de position (322) ; et la largeur de rainure de la deuxième rainure de limitation de position (322) est supérieure à une somme de l'épaisseur de la deuxième plaque de limitation de position (12) et de l'épaisseur de la quatrième plaque de limitation de position (22).

5. Palier aérodynamique radial à feuilles selon la revendication 1, dans lequel les groupes de rainures et le manchon de palier (3) sont formés d'un seul tenant.

6. Palier aérodynamique radial à feuilles selon la revendication 1, dans lequel un revêtement autolubrifiant solide est prévu sur la surface intérieure du manchon de palier (3) située entre deux groupes de rainures de limitation de position (32) adjacents, et
un revêtement polymère résistant à l'usure est prévu sur une surface intérieure de chaque feuille supérieure (1).

7. Moteur, comprenant le palier aérodynamique radial à feuilles selon l'une quelconque des revendications 1 à 6.

8. Compresseur de gaz, comprenant le moteur selon la revendication 7.
